# EUROPÄISCHE PATENTSCHRIFT

(11) **EP 0 797 864 B1**
(45) Veröffentlichungstag und Bekanntmachung des Hinweises auf die Patenterteilung: **29.07.1998**
(21) Anmeldenummer: 95942078.7
(22) Anmeldetag: 08.12.1995
(51) Int. Cl.: H02M 1/12, H02M 7/217

(54) **NETZGLEICHRICHTERSCHALTUNG**
POWER RECTIFIER CIRCUIT
CIRCUIT REDRESSEUR DE SECTEUR

(30) Priorität: 12.12.1994 AT 23149/49
(43) Veröffentlichungstag der Anmeldung: 01.10.1997
(73) Patentinhaber: Siemens Aktiengesellschaft Österreich, 1210 Wien (AT)
(72) Erfinder: SPITALER, Wolfgang, A-1030 Wien (AT)
(74) Vertreter: Epping, Wilhelm, Dr.-Ing.
(86) Internationale Anmeldenummer: EP9504837
(87) Internationale Veröffentlichungsnummer: WO9619036

(56) Entgegenhaltungen:
- PROCEEDINGS OF THE INTERNATIONAL CONFERENCE ON INDUSTRIAL ELECTRONICS CONTROL AND INSTRUMENTATION. (IECON), BOLOGNA, SEPT. 5 - 9, 1994 PLENARY SESSION POWER ELECTRONICS 05 September 1994, INSTITUTE OF ELECTRICAL AND ELECTRONICS ENGINEERS, XP000528669 RAMESH ORUGANTI ET AL 'A NOVEL PFC SCHEME FOR AC TO DC CONVERTER WITH REDUCED LOSSES'
- PROCEEDINGS OF THE INTERNATIONAL TELECOMMUNICATIONS ENERGY CONFERENCE (INTELEC), WASHINGTON, OCT. 4 - 8, 1992 04 Oktober 1992, INSTITUTE OF ELECTRICAL AND ELCTRONICS ENGINEERS, XP000357572 TOLLIK D ET AL 'COMPARATIVE ANALYSIS OF 1-PHASE ACTIVE POWER FACTOR CORRECTION TOPOLOGIES'

## Beschreibung

Die Erfindung bezieht sich auf eine Netzgleichrichterschaltung für Stromversorgungsgeräte, insbesondere für Schaltnetzteile, mit einem an der Netzspannung liegenden Vollweggleichrichter und einem diesem nachgeschalteten Ladekondensator, wobei der Ladekondensator über die Serienschaltung einer Boost-Induktivität und einer Diode, bei welcher der Verbindungspunkt der Boost-Induktivität mit der Diode über einen gesteuerten Schalter an Masse liegt, mit einer Taktfrequenz, die erheblich höher als die Netzfrequenz ist, geladen wird.

Stromversorgungsgeräte, insbesondere Schaltnetzteile zum Anschluß an ein Wechselstromnetz, weisen im einfachsten Fall einen Gleichrichter auf, dem ein Elektrolytkondensator nachgeschaltet ist. Der Ladestromverlauf des Kondensators führt zu starken Oberwellen im Netz und belastet dieses durch eine hohe Scheinleistung. Die Massenverwendung von Stromversorgungsgeräten innerhalb der letzten 20 Jahre hat aus diesen Gründen bereits zu ernsthaften Problemen in den Versorgungsnetzen geführt.

Eine kurze Darstellung dieser Problematik und verschiedene Lösungsansätze, die zu einer ausgewogenen Netzbelastung führen sollen, sind in dem Artikel "Comparison of Standards and Power Supply Design Options for Limiting Harmonic Distortion in Power Systems", von Key und Lai, in "IEEE Transactions on Industrie Applications" Vol.20, No.4, July/August 1993, p.688 bis 695 aufgezeigt. Eine der dort aufgezeigten und in der Praxis auch angewandten Schaltungen die dem Oberbegriff des Anspruches entspricht, besitzt einen sogenannten "Boost-Converter". Mittels einer aufwendigen Steuerung läßt sich mit diesem sogar ein praktisch sinusförmiger Verlauf des Eingangsstromes erzielen. Wie in dem Artikel bemerkt wird, stehen einer breiten Markteinführung jedoch die höheren Kosten und die geringere Zuverlässigkeit entgegen, die durch zusätzliche Bauteile bedingt ist.

Aufgabe der Erfindung ist die Schaffung einer einfachen und kostengünstigen Lösung, welche zu einer merklichen Verringerung des Oberwellenanteils und zu einer Verbesserung des Leistungsfaktors führt.

Diese Aufgabe wird mit einer Schaltung der eingangs genannten Art gelöst, bei welcher erfindungsgemäß der Ladekondensator sowie die Last an dem Vollweggleichrichter liegen, ein Hilfsgleichrichter vorgesehen ist, von dem die Serienschaltung der Boost-Induktivität und der Diode zu dem Ladekondensator führt, und der Schalter über eine Ansteuerschaltung so gesteuert ist, daß in Zeitbereichen um die Nulldurchgänge der gleichgerichteten Halbwellen über die Boost-Induktivität zusätzlicher Ladestrom an den Ladekondensator geliefert wird.

Während bei einer reinen Gleichrichterschaltung mit Ladekondensator - im üblichen Lastfall immer nur im Bereich der Scheitelwerte der gleichgerichteten Halbwellen Stromspitzen auftreten, wird dank der Erfindung ein Teil des Ladestromes mit einfachen Mitteln verlagert, nämlich in die sonst stromlosen Bereiche um die Nulldurchgänge. Hierbei hält sich der Aufwand für zusätzliche Bauteile durchaus in Grenzen. Es kommt zu einer Verminderung des Oberwellenanteils des Eingangsstromes und zu einer Verbesserung des Wirkungsgrades und des Leistungsfaktors.

Vorteilhaft ist es, wenn dem Hilfsgleichrichter ein Hilfskondensator unmittelbar nachgeschaltet ist. Die Taktfrequenz des gesteuerten Schalters liegt zweckmäßigerweise im kHz-Bereich.

Der Hilfsgleichrichter ist vorteilhafterweise von zwei bezüglich des Vollweggleichrichters als Halbbrücke geschalteten Dioden gebildet.

Aus der Schrift IEEE, Bd. 1 of 3, 5. September 1994, Seiten 639 bis 645, XP 000528669, Ramesh Oruganti et al, ,,A Novel PFC Scheme For AC To DC Converter With Reduced Losses" ist eine Gleichrichterschaltung mit einem sogenannten "power factor correction" Schaltkreis bekannt, welcher direkt an den von einem Vollweggleichrichter gespeisten Leistungsschaltkreis angeschlossen ist.

Die Aufgabe wird auch mit einer Netzgleichrichterschaltung für Stromversorgungsgeräte, insbesondere für Schaltnetzteile gelöst, mit einem an der Netzspannung liegenden Vollweggleichrichter und einem Ladekondensator, wobei der Ladekondensator über die Serienschaltung einer Boost-Induktivität und einer Diode, bei welcher der Verbindungspunkt der Boost-Induktivität mit der Diode über einen ersten gesteuerten Schalter an Masse liegt, mit einer Taktfrequenz, die erheblich höher als die Netzfrequenz ist, geladen wird, wobei die Ladespannung höher als der Scheitelwert der Netzspannung gewählt wird, bei welcher erfindungsgemäß die Last an dem Vollweggleichrichter liegt, ein Hilfsgleichrichter vorgesehen ist, von dem die Serienschaltung der Boost-Induktivität und der Diode zu dem Ladekondensator führt, der erste Schalter über eine Ansteuerschaltung so gesteuert ist, daß in Zeitbereichen um die Nulldurchgänge der gleichgerichteten Halbwellen über die Boost-Induktivität Ladestrom an den Ladekondensator geliefert wird und daß ein zweiter gesteuerter Schalter vorgesehen ist, über welchen die Last mit dem Ladekondensator verbunden ist, und welcher über eine zweite Ansteuerschaltung so gesteuert ist, daß er in einem Zeitbereich um die Nulldurchgänge der gleichgerichteten Halbwellen im Takt der doppelten Netzfrequenz periodisch schließt. Dank der Verwendung des zweiten, netzsynchron getakteten Schalters ergibt sich eine weitere Verbesserung des Eingangsstromverlaufes im Sinne eines geringeren Oberwellenanteils.

Die Erfindung samt anderen Vorteilen ist im folgenden anhand von zwei Ausführungsbeispielen näher erläutert, die in der Zeichnung veranschaulicht sind. In dieser zeigen
- Fig. 1: eine erste Ausführungsform der Erfindung in einem schematischen Schaltbild,
- Fig. 2: in zwei Diagrammen den zeitlichen Verlauf der Ausgangsspannung bzw. des Eingangsstromes bei der Ausführung nach Fig.1,
- Fig. 3: eine zweite Ausführungsform der Erfindung in einem schematischen Schaltbild und
- Fig. 4: in drei Diagrammen den zeitlichen Verlauf der Ausgangsspannung bzw. des Ausgangsstromes in zwei Lastfällen bei der Ausführung nach Fig. 3.

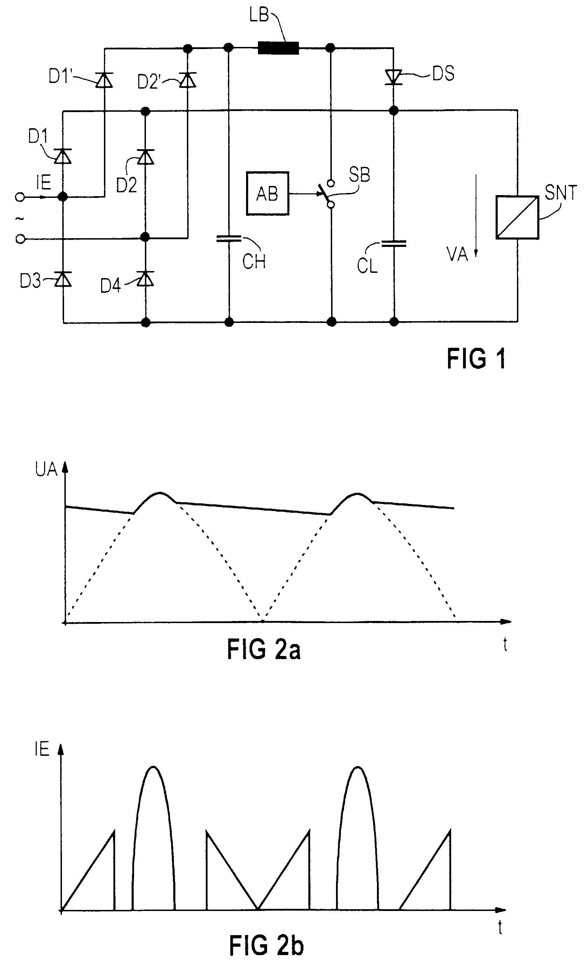

Fig. 1 zeigt eine Netzgleichrichterschaltung für ein Schaltnetzteil SNT, welcher hier nur angedeutet ist und im folgenden auch als "Last" bezeichnet wird. An der Netzspannung UE liegt ein Vollweggleichrichter D1...D4, bestehend aus vier in Graetz-Schaltung angeordneten Dioden D1, D2, D3, D4. Die Last bzw. der Schaltnetzteil SNT sowie ein Ladekondensator CL liegen direkt, gegebenenfalls auch über ein Filter oder Filterglied an dem Ausgang des Vollweggleichrichters D1...D4. Es ist weiterhin ein Hilfsgleichrichter, bestehend aus zwei zusätzlichen Dioden D1', D2' und den Dioden D3, D4 vorgesehen. Der Ausgang dieses Hilfsgleichrichters liegt über die Serienschaltung einer Boost-Induktivität LB und einer in Durchlaßrichtung angeordneten Diode DS an dem Ladekondensator CL. Dem Hilfsgleichrichter D1', D2' unmittelbar nachgeschaltet ist noch ein Hilfskondensator CH.

Der Verbindungspunkt der Boost-Induktivität LB mit der Diode DS ist über einen gesteuerten Schalter SB mit Masse verbunden. Dieser Schalter SB ist über eine Ansteuerschaltung AB so gesteuert, daß der Ladekondensator CL in Zeitbereichen um die Nulldurchgänge der gleichgerichteten Halbwellen bei einer Taktfrequenz zusätzlich geladen wird, die erheblich höher als die Netzfrequenz ist, wobei die Ladespannung höher als der Scheitelwert der Netzspannung gewählt wird.

Der Schalter SB, kann z.B. als Feldeffekttransistor ausgebildet sein und er wird mit einer Frequenz im kHz-Bereich, typisch zwischen 20kHz und 100kHz getaktet, jedoch nicht wie üblich über die ganze Halbperiode, sondern nur eine vorgewählte Zeit um die Nulldurchgänge. Hierdurch werden die Typenleistung der Längsdrossel, hier der Boost-Induktivität LB, sowie des Transistorschalters SB und auch die Verlustleistung der Gesamtschaltung verringert. Der Oberwellenanteil des Eingangsstromes IE kann gegenüber der einfachen Graetz-Gleichrichterschaltung mit Ladekondensator stark herabgesetzt werden, da nun auch außerhalb der Spannungsmaxima ein Stromfluß erreicht wird und die Stromspitzen im Bereich der Spannungsmaxima entsprechend verringert werden können.

In Fig. 2a ist der Verlauf der Ausgangsspannung UA für einen bestimmten Lastfall dargestellt, wobei die gleichgerichteten Halbwellen strichliert eingezeichnet sind. Der zugehörige Eingangsstrom ist Fig. 2b entnehmbar. Man erkennt dort die Stromimpulse im Bereich der Spannungsmaxima (Ladestrom über den Gleichrichter D1 ... D4) sowie die dreieckförmigen Stromimpulse um die Spannungsminima herum, die auf die Wirkung der Boostschaltung zurückzuführen sind.

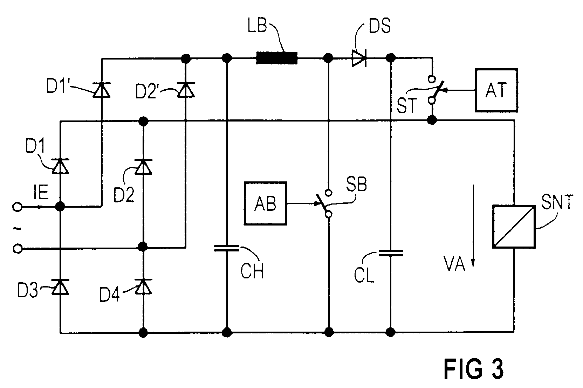

Falls man etwas mehr Aufwand in Kauf nimmt, um eine weitere Verbesserung der Netzbelastung zu erzielen, kann man die Schaltung nach Fig. 3 verwenden, die zusätzlich einen zweiten, netzsynchrongetakteten Schalter besitzt.

Wie nach Fig. 1 liegt die Last bzw. das Schaltnetzteil SNT direkt, gegebenenfalls auch über ein Filter oder Filterglied an dem Ausgang des Vollweggleichrichters D1...D4. Der Ausgang des Hilfsgleichrichters D1', D2' (D3, D4) liegt über die Serienschaltung der Boost-Induktivität LB und der Diode DES an dem Ladekondensator CL. Dem Hilfsgleichrichter D1', D2' unmittelbar nachgeschaltet ist auch hier ein Hilfskondensator CH. Der Verbindungspunkt der Boost-Induktivität LB mit der Diode DS ist über einen ersten gesteuerten Schalter SB mit Masse verbunden. Dieser erste Schalter SB ist über eine erste Ansteuerschaltung AB so gesteuert, daß der Ladekondensator CL in Zeitbereichen um die Nulldurchgänge der gleichgerichteten Halbwellen bei einer Taktfrequenz geladen wird, die erheblich höher als die Netzfrequenz ist, wobei die Ladespannung höher als der Scheitelwert der Netzspannung gewählt wird.

Der Ladekondensator CL ist mit der Last SNT über einen zweiten gesteuerten Schalter ST verbunden, der über eine zweite Ansteuerschaltung AT so gesteuert ist, daß er in einem Zeitbereich um die Nulldurchgänge der gleichgerichteten Halbwellen im Takt der doppelten Netzfrequenz periodisch schließt. Die Wirkungsweise der Boost-Schaltung LB-SB-DS wurde im Zusammenhang mit Fig. 1 bereits beschrieben.

Der Ladekondensator CL wird mittels des Zeiten gesteuerten Schalters ST über eine gewählte Teilzeit der Halbperiode um die Nulldurchgänge der gleichgerichteten Halbwellen an die Last SNT entladen, so daß der Schalter ST im Takt der doppelten Netzfrequenz periodisch schließt bzw. öffnet, z.B. +/-45° um den Spannungsnulldurchgang, d.h. ein Teil des Stromflusses tritt nun zusätzlich vor und nach den Spitzen der gewöhnlichen Gleichrichterschaltung auf.

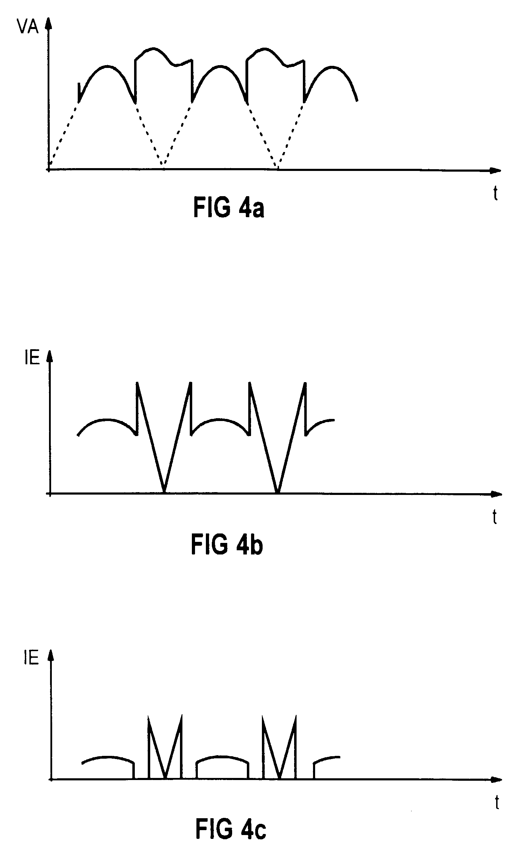

Der mit doppelter Netzfrequenz getaktete Schalter ST wirkt daher im Sinne einer Verbreiterung der Stromimpulse im Bereich der Spannungsmaxima. Insgesamt ergibt sich ein über die Periodendauer gut verteilter Stromverlauf, wie sich aus Fig. 4 ablesen läßt. Fig. 4a zeigt den Verlauf der Ausgangsspannung und man erkennt deutlich die Spannungsüberhöhung an CL im Bereich der Nulldurchgänge, hervorgerufen durch den Hochsetzsteller LB, SB, DS, CL (Boost-Converter). Fig. 4a und 4b betreffen den Betriebsfall "100 % Nennlast" und aus Fig. 4b zeigt sich, daß - abgesehen von den Nulldurchgängen - immer Eingangsstrom fließt. Fig. 4c betrifft eine Last von lediglich 25 % Nennlast. In diesem Fall gibt es Zeitabschnitte, während welcher kein Eingangsstrom fließt, doch ist hier der Strom insgesamt geringer.

Mit der Schaltung nach Fig. 3 ergibt sich somit ohne erheblichen Mehraufwand eine weitere Verbesserung in Hinblick auf geringen Oberwellenanteil und Leistungsfaktor. Die gesteuerten Schalter SB, ST müssen jeweils nur einen Teil der Gesamtschaltleistung übernehmen, zumal der Stromfluß zur Last zum Teil auch direkt über die Gleichrichterbrücke erfolgt. Insgesamt können für die Leistungshalbleiter daher kostengünstigere Typen gewählt werden.

## Patentansprüche

1. Netzgleichrichterschaltung für Stromversorgungsgeräte, insbesondere für Schaltnetzteile, mit einem an der Netzspannung liegenden Vollweggleichrichter (D1 ... D4) und einem diesem nachgeschalteten Ladekondensator (CL), wobei der Ladekondensator über die Serienschaltung einer Boost-Induktivität (LB) und einer Diode (DS), bei weicher der Verbindungspunkt der Boost-Induktivität mit der Diode über einen gesteuerten Schalter (SB) am negativen Ausgang des Vollweggleichrichters (D1 ... D4) liegt, mit einer Taktfrequenz, die erheblich höher als die Netzfrequenz ist, geladen wird **dadurch gekennzeichnet,** daß
a) der Ladekondensator (CL) sowie die Last (SNT) an dem Vollweggleichrichter (D1 ... D4) liegen,
b) ein Hilfsgleichrichter (D1', D2') vorgesehen ist, von dem die Serienschaltung der Boost-Induktivität und der Diode zu dem Ladekondensator führt, und
c) der Schalter über eine Ansteuerschaltung (AB) so gesteuert ist, daß in Zeitbereichen um die Nulldurchgänge der gleichgerichteten Halbwellen über die Boost-Induktivität zusätzlicher Ladestrom an den Ladekondensator geliefert wird.

2. Netzgleichrichterschaltung nach Anspruch 1,
**dadurch gekennzeichnet**, daß dem Hilfsgleichrichter (D1', D2') ein Hilfskondensator (CH) unmittelbar nachgeschaltet ist.

3. Netzgleichrichterschaltung nach Anspruch 1 oder 2,
**dadurch gekennzeichnet**, daß die Taktfrequenz des gesteuerten Schalters (SB) im kHz-Bereich liegt.

4. Netzgleichrichterschaltung nach einem der Ansprüche 1 bis 3,
**dadurch gekennzeichnet**, daß der Hilfsgleichrichter von zwei bezüglich des Vollweggleichrichters (D1 ... D4) als Halbbrücke geschalteten Dioden (D1', D2') gebildet ist.

5. Netzgleichrichterschaltung für Stromversorgungsgeräte, insbesondere für Schaltnetzteile, mit einem an der Netzspannung liegenden Vollweggleichrichter (D1 ... D4) und einem Ladekondensator (CL), wobei der Ladekondensator über die Serienschaltung einer Boost-Induktivität (LB) und einer Diode (DS), bei welcher der Verbindungspunkt der Boost-Induktivität mit der Diode über einen ersten gesteuerten Schalter (SB) am negativen Ausgang des Vollweggleichrichters (D1 ... D4) liegt, mit einer Taktfrequenz, die erheblich höher als die Netzfrequenz ist, geladen wird, wobei die Ladespannung höher als der Scheitelwert der Netzspannung gewählt wird, **dadurch gekennzeichnet**, daß
a) die Last (SNT) an dem Vollweggleichrichter (D1 ... D4) liegt,
b) ein Hilfsgleichrichter (D1', D2') vorgesehen ist, von dem die Serienschaltung der Boost-Induktivität (LB) und der Diode zu dem Ladekondensator führt, und
c) der erste Schalter (SB) über eine Ansteuerschaltung (AB) so gesteuert ist, daß in Zeitbereichen um die Nulldurchgänge der gleichgerichteten Halbwellen über die Boost-Induktivität Ladestrom an den Ladekondensator (CL) geliefert wird und daß ein zweiter gesteuerter Schalter (ST) vorgesehen ist, über welchen die Last (SNT) mit dem Ladekondensator (CL) verbunden ist, und welcher über eine zweite Ansteuerschaltung (AT) so gesteuert ist, daß er in einem Zeitbereich um die Nulldurchgänge der gleichgerichteten Halbwellen im Takt der doppelten Netzfrequenz periodisch schließt.

## Claims

1. Mains rectifier circuit for power supply units, in particular for switched-mode power supplies, having a full-wave rectifier (D1 ... D4) which is connected to the mains voltage and having a smoothing capacitor (CL) which is connected downstream of said full-wave rectifier (D1 ... D4), the smoothing capacitor being charged at a clock frequency, which is considerably higher than the mains frequency, via the series circuit formed by a boost inductance (LB) and a diode (DS), in the case of which series circuit the junction point between the boost inductance and the diode is connected to the negative output of the full-wave rectifier (D1 ... D4) via a controlled switch (SB),
characterized in that
a) the smoothing capacitor (CL) and the load (SNT) are connected to the full-wave rectifier (D1 ... D4),
b) an auxiliary rectifier (D1', D2') is provided, from which the series circuit formed by the boost inductance and the diode leads to the smoothing capacitor, and
c) the switch is controlled via a drive circuit (AB) such that additional charging current is supplied to the smoothing capacitor, via the boost inductance, in time periods around the zero crossings of the rectified half-cycles.

2. Mains rectifier circuit according to Claim 1,
characterized in that
an auxiliary capacitor (CH) is connected directly downstream of the auxiliary rectifier (D1', D2').

3. Mains rectifier circuit according to Claim 1 or 2,
characterized in that
the clock frequency of the controlled switch (SB) is in the kHz range.

4. Mains rectifier circuit according to one of Claims 1 to 3,
characterized in that
the auxiliary rectifier is formed by two diodes (D1', D2') which are connected as a half-bridge with respect to the full-wave rectifier (D1 ... D4).

5. Mains rectifier circuit for power supply units, in particular for switched-mode power supplies, having a full-wave rectifier (D1 ... D4) which is connected to the mains voltage and having a smoothing capacitor (CL), the smoothing capacitor being charged at a clock frequency, which is considerably higher than the mains frequency, via the series circuit formed by a boost inductance (LB) and a diode (DS), in the case of which series circuit the junction point between the boost inductance and the diode is connected to the negative output of the full-wave rectifier (D1 ...D4) via a first controlled switch (SB), the charging voltage being selected to be higher than the peak value of the mains voltage,
characterized in that
a) the load (SNT) is connected to the full-wave rectifier (D1 ... D4),
b) an auxiliary rectifier (D1', D2') is provided, from which the series circuit formed by the boost inductance (LB) and the diode leads to the smoothing capacitor, and
c) the first switch (SB) is controlled via a drive circuit (AB) such that charging current is supplied to the smoothing capacitor (CL), via the boost inductance, in time periods around the zero crossings of the rectified half-cycles, and such that a second controlled switch (ST) is provided via which the load (SNT) is connected to the smoothing capacitor (CL) and which is controlled via a second drive circuit (AT) such that it closes periodically at the rate of twice the mains frequency in a time period around the zero crossings of the rectified half-cycles.

## Revendications

1. Circuit redresseur de secteur pour des appareils d'alimentation en courant, notamment pour des alimentations à découpage, comportant un redresseur à deux alternances (D1 ... D4) auquel est appliquée la tension du secteur, et un condensateur de charge (CL) branché en aval de ce dernier, le condensateur de charge étant chargé à une fréquence de cadençage qui est nettement plus grande que la fréquence du secteur par l'intermédiaire du circuit série d'une inductance boost (LB) et d'une diode (DS), dans lequel le point de liaison entre l'inductance boost et la diode est relié à la sortie négative du redresseur à deux alternances (D1 ... D4) par l'intermédiaire d'un interrupteur (SB) commandé,
caractérisé par le fait que
a) le condensateur de charge (CL) ainsi que la charge (SNT) sont appliqués au redresseur à deux alternances (D1 ... D4),
b) il est prévu un redresseur auxiliaire (D1', D2'), à partir duquel le circuit série de l'inductance boost et de la diode conduit au condensateur de charge, et que
c) l'interrupteur est commandé par l'intermédiaire d'un circuit de commande (AB) de telle sorte que, dans des plages de temps situées autour des passages par zéro des alternances redressées, du courant de charge supplémentaire est envoyé au condensateur de charge par l'intermédiaire de l'inductance boost.

2. Circuit redresseur de secteur selon la revendication 1,
caractérisé par le fait que
un condensateur auxiliaire (CH) est branché juste en aval du redresseur auxiliaire (D1', D2').

3. Circuit redresseur de secteur selon la revendication 1 ou 2,
caractérisé par le fait que
la fréquence de cadençage de l'interrupteur (SB) commandé se situe dans la plage des kHz.

4. Circuit redresseur de secteur selon l'une des revendications 1 à 3,
caractérisé par le fait que
le redresseur auxiliaire est constitué de deux diodes (D1', D2') qui sont branchées en demi-pont par rapport au redresseur à deux alternances (D1 ... D4).

5. Circuit redresseur de secteur pour des appareils d'alimentation en courant, notamment pour des alimentations à découpage, comportant un redresseur à deux alternances (D1 ... D4) auquel est appliquée la tension du secteur, et un condensateur de charge (CL), le condensateur de charge étant chargé à une fréquence de cadençage qui est nettement plus grande que la fréquence du secteur par l'intermédiaire du circuit série d'une inductance boost (LB) et d'une diode (DS), dans lequel le point de liaison entre l'inductance boost et la diode est relié à la sortie négative du redresseur à deux alternances (D1 ... D4) par l'intermédiaire d'un premier interrupteur (SB) commandé, la tension de charge étant choisie supérieure à la valeur de crête de la tension du secteur,
caractérisé par le fait que
a) la charge (SNT) est appliquée au redresseur à deux alternances (D1 ... D4),
b) il est prévu un redresseur auxiliaire (D1', D2'), à partir duquel le circuit série de l'inductance boost (LB) et de la diode conduit au condensateur de charge, et
c) le premier interrupteur (SB) est commandé par l'intermédiaire d'un circuit de commande (AB) de telle sorte que, dans des plages de temps situées autour des passages par zéro des alternances redressées, du courant de charge est envoyé au condensateur de charge (CL) par l'intermédiaire de l'inductance boost, et il est prévu un deuxième interrupteur (ST) commandé par l'intermédiaire duquel la charge (SNT) est reliée au condensateur de charge (CL) et qui est commandé par l'intermédiaire d'un deuxième circuit de commande (AT) de telle sorte qu'il se ferme périodiquement à une cadence double de la fréquence du secteur dans une plage de temps située autour des passages par zéro des alternances redressées.
